(19) Europäisches Patentamt / European Patent Office / Office européen des brevets

(11) **EP 3 862 401 B1**

(12) **EUROPEAN PATENT SPECIFICATION**

(45) Date of publication and mention
of the grant of the patent:
**10.12.2025 Bulletin 2025/50**

(21) Application number: **19869893.8**

(22) Date of filing: **30.09.2019**

(51) International Patent Classification (IPC):
*C09J 7/29* (2018.01)    *B32B 5/02* (2006.01)
*B32B 7/06* (2019.01)    *B32B 7/12* (2006.01)
*B32B 27/12* (2006.01)   *B32B 27/20* (2006.01)
*B32B 27/30* (2006.01)   *B32B 27/32* (2006.01)
*B32B 27/34* (2006.01)   *B32B 27/36* (2006.01)
*C09J 133/08* (2006.01)  *C08F 220/18* (2006.01)

(52) Cooperative Patent Classification (CPC):
(C-Sets available)
**B32B 7/12; B32B 5/022; B32B 5/024; B32B 5/026;
B32B 7/06; B32B 27/12; B32B 27/20;
B32B 27/304; B32B 27/306; B32B 27/32;
B32B 27/34; B32B 27/36; C08F 220/1808;
C09J 7/29; C09J 133/08;**    (Cont.)

(86) International application number:
**PCT/JP2019/038649**

(87) International publication number:
**WO 2020/071340 (09.04.2020 Gazette 2020/15)**

(54) **ADHESIVE TAPE**

KLEBEBAND

RUBAN ADHÉSIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.10.2018 JP 2018186745**

(43) Date of publication of application:
**11.08.2021 Bulletin 2021/32**

(73) Proprietor: **Mitsubishi Chemical Corporation
Chiyoda-ku
Tokyo 100-8251 (JP)**

(72) Inventors:
• **GESHI Makoto
Tokyo 100-8251 (JP)**
• **SAKAI Junichiro
Tokyo 100-8251 (JP)**

(74) Representative: **Kuhnen & Wacker
Patent- und Rechtsanwaltsbüro PartG mbB
Prinz-Ludwig-Straße 40A
85354 Freising (DE)**

(56) References cited:
WO-A1-2008/055789    WO-A1-2016/136717
JP-A- 2001 064 596    JP-A- 2001 240 817
JP-A- 2001 294 830    JP-A- 2001 294 830
JP-A- 2013 159 643    JP-A- 2018 039 901
JP-A- H 101 648       US-A1- 2011 195 625

(52) Cooperative Patent Classification (CPC): (Cont.)
B32B 2250/03; B32B 2250/40; B32B 2262/0223;
B32B 2262/0246; B32B 2262/0253;
B32B 2262/0261; B32B 2262/0284; B32B 2262/062;
B32B 2262/065; B32B 2264/02; B32B 2264/102;
B32B 2264/105; B32B 2264/108; B32B 2270/00;
B32B 2307/30; B32B 2307/518; B32B 2307/54;
B32B 2307/58; B32B 2307/71; B32B 2307/718;
B32B 2307/732; B32B 2307/744; B32B 2307/748;
B32B 2405/00; C08K 3/04; C09J 2203/346;
C09J 2301/122; C09J 2301/41; C09J 2400/263;
C09J 2433/00

C-Sets
**C08F 220/1808, C08F 218/08, C08F 220/06;**
**C09J 133/08, C08K 5/0025**

## Description

TECHNICAL FIELD

The present invention relates to an adhesive tape, and more particularly it relates to an adhesive tape for fixing a house wrap sheet and protecting the house wrap sheet from sunlight emitted from an opening of an outer wall panel.

BACKGROUND ART

In recent years, in house building, a moisture-permeable waterproof sheet for house wrap (house wrap sheet) has been fitted in order to prevent dew condensation that may occur inside the wall body of a house. The house wrap sheet is attached to the inner wall material surface side of a ventilation layer provided between an outer wall material and an inner wall material of the house with no gap, and the sheet prevents the intrusion of wind and rainwater from the outer wall side and also prevents dew condensation by letting moisture on the inner wall side escape to the outside. Panels may be used for the outer wall, and a gap is generated at the joints of the panels. Since there is a concern that the house wrap sheet is irradiated with sunlight from the gap and the house wrap sheet is deteriorated to lower the waterproof property, there has been adopted a method of attaching an adhesive tape that can block UV (ultraviolet) rays and protect the house wrap sheet to the joint portions of the panels on the house wrap sheet in advance.

There are various requirements for such a tape. For example, the tape should have a hand-cutting property that it can be cut by hand quickly and easily in a use site, and the tape should be easily re-peelable in order to reattach the tape. It is particularly important that the tape has a sufficient UV blocking property and the mechanical properties do not decrease even after long-term use. It is necessary not to result in such inconveniences, which may be caused by irradiation with sunlight, that the adhesive force of the adhesive tape that fixes the house wrap sheet decreases, the adhesive tape curls and peels off and the house wrap sheet deteriorates, and the strength of the tape itself decreases.

Conventionally, a paper or cloth adhesive tape has been used as such an adhesive tape for fixing the house wrap sheet. However, the conventional paper or cloth adhesive tape has a poor hand-cutting property, and it is difficult to cut it linearly and neatly in a transverse direction of the tape.

On the other hand, as an adhesive tape that can be cut linearly and neatly in a transverse direction of the adhesive tape for fixing the house wrap sheet, there has been proposed an adhesive tape in which a cloth-like body formed of a flat yarn made of a thermoplastic resin is used as a base material layer, a film layer made of a thermoplastic resin is laminated on both surfaces thereof, and an adhesive layer is formed on one surface thereof. Further, as an adhesive tape having excellent heat-aging resistance, an adhesive tape containing an antioxidant in a film made of the above-mentioned thermoplastic resin has been proposed (Patent Literature 1). Moreover, Patent Literature 2 and Patent Literature 3 refer to adhesive tapes according to prior art.

CITATION LIST

PATENT LITERATURE

    Patent Literature 1: JP 2003-119437 A
    Patent Literature 2: JP 2001-294830 A
    Patent Literature 3: WO 2008/055789 A1

SUMMARY OF INVENTION

TECHNICAL PROBLEM

However, the adhesive tape described in Patent Literature 1 can maintain the heat-aging resistance of the adhesive tape itself, but since it has an insufficient UV blocking property, when it is used in a portion exposed to direct sunlight, there are problems that the adhesive force decreases, the house wrap sheet deteriorates, and the water resistance decreases, probably because of deterioration of the adhesive layer by UV rays.

Moreover, in the conventional colored adhesive tape in which a film made of a thermoplastic resin is impregnated with a pigment, there is concern that a UV blocking property is insufficient or the temperature of the adhesive tape is elevated due to sunlight irradiation to make the adhesive tape curl, as a result, peeling occurs or the tensile strength of the tape decreases, and breakage or deterioration of the house wrap sheet occurs.

The present invention has been made in view of the above-mentioned conventional circumstances, and in the first invention, an object is to provide an adhesive tape which is excellent in the hand-cutting property and mechanical properties and is less likely to be curled by irradiation with sunlight. Further, in the second invention, an object is to provide an adhesive tape which is excellent in the UV blocking property and mechanical properties and is less likely to be curled by irradiation with sunlight.

SOLUTION TO PROBLEM

As a result of extensive studies in consideration of such circumstances, the present inventors have found, as a first invention, that an adhesive tape that is excellent in the hand-cutting property and mechanical properties, is less likely to be curled even when the temperature is elevated and is suitable for fixing a house wrap sheet can be realized by an adhesive tape in which flat yarn cloth is used as a base material layer of the adhesive tape, a thermoplastic resin film is laminated on both surfaces thereof, and an adhesive layer is laminated on one of the thermoplastic resin films, wherein a pigment is incorporated into the thermoplastic resin films on both surfaces.

Thus, they have completed the present invention.

That is, the present invention has the following configurations [1] to [5].

[1] An adhesive tape comprising a base material layer made of flat yarn cloth, a first film layer made of a thermoplastic resin film laminated on one surface of the base material layer, a second film layer made of a thermoplastic resin film laminated on the other surface of the base material layer, and an adhesive layer laminated on the surface of the second film layer opposite to the base material layer, wherein the first film layer and the second film layer both contain a black pigment, and a content of the black pigment in the first film layer and a content of the black pigment in the second film layer are both 1 to 10% by weight.

[2] The adhesive tape according to [1], wherein the black pigment is carbon black.

[3] The adhesive tape according to any one of [1] to [2], wherein the thickness of the first film layer and the thickness of the second film layer are both 10 to 100 $\mu$m.

[4] The adhesive tape according to any one of [1] to [3], wherein the adhesive layer is made of an adhesive composition, the adhesive composition contains an acrylic polymer (a) and a crosslinking agent (b), and a gel fraction of the adhesive layer is 20 to 80% by weight, wherein the gel fraction is a measure of the degree of crosslinking or degree of curing, calculated by the following method: The adhesive is collected by picking from the adhesive tape in which the adhesive layer is formed on the second film layer on the base material layer, the adhesive is wrapped with a 200-mesh SUS wire net and immersed in toluene at 23 °C for 48 hours, and the weight percentage of the insoluble adhesive component remaining in the wire net is regarded as the gel fraction.

ADVANTAGEOUS EFFECTS OF INVENTION

The adhesive tape according to the invention has a good hand-cutting property and excellent mechanical properties, and is less likely to be curled by irradiation with sunlight. The adhesive tape is particularly preferably used for fixing a house wrap sheet.

Hereinafter, embodiments of the present invention will be described.

In the present invention, (meth)acrylate means acrylate or methacrylate, (meth)acrylic means acrylic or methacrylic, and (meth)acryloyl means acryloyl or methacryloyl.

Embodiments of the present invention will be described below.

[Base Material Layer]

The adhesive tape of the present invention has a base material layer made of flat yarn cloth.

Flat yarn cloth is a woven fabric made by cutting a polyethylene or polypropylene film called a flat yarn into strips and weaving flat yarns that have been stretched to give strength. The intersections of the flat yarns that intersect longitudinally and transversely in the woven fabric are fixed by heat fusion to prevent yarn slippage.

For the flat yarn cloth to which the hand-cutting property is further imparted, for example, a flat yarn thinner in the longitudinal direction than in the width direction is used, or the number of flat yarns in the width direction is smaller than the number of flat yarns per length in the longitudinal direction. Thereby, it becomes easy to tear in the width direction, but it is difficult to tear in the longitudinal direction. In addition, high tensile strength in the longitudinal direction is also a characteristic of the flat yarn cloth to which the hand-cutting property is imparted.

A base material reinforced with non-woven fibers, different from flat yarn cloth, has much lower tensile strength as compared with the case of woven cloth. By laminating a biaxially stretched polyester film or a biaxially stretched polypropylene film with an adhesive in order to compensate for it, the tensile strength is improved, but it becomes difficult to tear the base material in the width direction. In addition, an adhesive is required for adhering the warp and weft yarns, and the weight of the base material tends to increase.

[First Film Layer, Second Film Layer]

Further, the adhesive tape of the present invention has a first film layer made of a thermoplastic resin film laminated on one surface of the base material layer made of flat yarn cloth and a second film layer made of a thermoplastic resin film laminated on the other surface of the base material layer.

As the thermoplastic resin constituting the thermoplastic resin film, one type or two or more types of different thermoplastic resins may be used through blending. The thermoplastic resin is not particularly limited, and examples thereof include polyethylene-based resins, polypropylene-based resins, polyester-based resins, $\alpha$-olefin-based polymers having a tertiary carbon in the side chain, Nylon resins, polyvinyl chloride resins, polyvinylidene chloride resins, and ethylene vinyl alcohol resins. Among these, from the viewpoint of suitability as a film material and processability, it is preferable to use one type or two or more types of different thermoplastic resins in combination, which are selected from polyethylene-based resins, polypropylene-based resins, polyester-based resins, and $\alpha$-olefin-based polymers having a tertiary carbon in the side chain, but a polyethylene-based resin is preferable in view of a heat-fusion property with flat yarn cloth and strength.

The thermoplastic resin film (first film layer, second film layer) is preferably a thin film, and the thickness of the thermoplastic resin film is preferably 10 to 100 $\mu$m, particularly preferably 20 to 60 $\mu$m, and still more preferably 30 to 50 $\mu$m. When the thermoplastic resin film is excessively thin, the UV blocking property tends to decrease and the mechanical properties of the adhesive tape tend to lower. When it is excessively thick, the curl of the adhesive tape tends to be large.

The thermoplastic resin film is laminated on both surfaces of the base material layer made of flat yarn cloth, and the method of laminating the thermoplastic resin film on the base material layer is preferably extrusion lamination in view of capability of weight reduction without using an adhesive.

In the adhesive tape of the present invention, a black pigment is contained in both the first film layer and the second film layer. When only one of the film layers contains the pigment, the UV blocking property decreases, and when the pigment content is increased to compensate for it, the UV blocking property is improved, but the tensile strength of the adhesive tape is lowered and/or curling occurs during use. Further, when the thickness of the film layer containing the pigment is increased, the UV blocking property is improved, but curling is likely to occur during use.

The pigment to be used is a black pigment such as carbon black, aniline black, titanium black, inorganic pigment hematite, and perylene black are preferable, and of these, carbon black is more preferable.

The content of the pigment in the thermoplastic resin film (first film layer, second film layer) is 1 to 10% by weight, particularly preferably 2 to 6% by weight. When the content of the pigment is excessively small, the UV blocking property tends to decrease, and when it is excessively large, the tensile strength of the adhesive tape tends to decrease.

Various additives can be added to the thermoplastic resin film according to the purpose. Specifically, there may be mentioned antioxidants, light stabilizers, ultraviolet absorbers, antistatic agents, flame retardants, fillers, antibacterial agents, dispersants such as bisamide-based, wax-based and organic metal salt-based ones; lubricants such as amide-based, wax-based, organic metal salt-based and ester-based ones, and the like.

The total thickness of the base material layer, the first film layer and the second film layer is preferably 10 to 200 $\mu$m, particularly preferably 30 to 180 $\mu$m, and still more preferably 50 to 150 $\mu$m. When the thickness is excessively thin, the UV blocking property tends to decrease, and when it is excessively thick, the hand-cutting property tends to decrease.

[Adhesive Layer]

In the adhesive tape of the present invention, an adhesive layer is laminated on a surface of the second film layer opposite to the base material layer. Such an adhesive layer is formed by crosslinking an adhesive composition, and the adhesive composition preferably contains an acrylic polymer (a).

The acrylic polymer (a) is a product of polymerizing one or two or more types of acrylic monomers. Examples of the acrylic monomer include (meth)acrylic acid alkyl esters having an alkyl group having 1 to 18 carbon atoms, preferably 1 to 8 carbon atoms, such as methyl (meth)acrylate, ethyl (meth)acrylate, n-butyl (meth)acrylate, iso-butyl (meth)acrylate, tert-butyl (meth)acrylate, n-propyl (meth)acrylate, n-hexyl (meth)acrylate, 2-ethylhexyl (meth)acrylate, n-octyl (meth) acrylate, isodecyl (meth)acrylate, lauryl (meth)acrylate, cetyl (meth)acrylate, and stearyl (meth)acrylate.

As monomers constituting the acrylic polymer (a), there may be mentioned carboxyl group-containing monomers, hydroxyl group-containing monomers, and the other monomers, in addition to the acrylic monomers.

Examples of the carboxyl group-containing monomers include (meth)acrylic acid, acrylic acid dimer, crotonic acid, maleic acid, maleic anhydride, fumaric acid, citraconic acid, glutaconic acid, itaconic acid, acrylamide N-glycolic acid, and cinnamic acid. Examples of the hydroxyl group-containing monomers include acrylic acid hydroxyalkyl esters such as 2-hydroxyethyl (meth)acrylate, 4-hydroxybutyl (meth)acrylate, 5-hydroxypentyl (meth)acrylate, 6-hydroxyhexyl (meth) acrylate, and 8-hydroxyoctyl (meth)acrylate, caprolactone-modified monomers such as caprolactone-modified 2-hydroxyethyl (meth)acrylate, oxyalkylene-modified monomers such as diethylene glycol (meth)acrylate and polyethylene glycol (meth)acrylate, in addition, primary hydroxyl group-containing monomers such as 2-acryloyloxyethyl 2-hydroxyethylphthalic acid and N-methylol (meth)acrylamide; secondary hydroxyl group-containing monomers such as 2-hydroxypropyl (meth)acrylate, 2-hydroxybutyl (meth)acrylate, 2-hydroxy3-phenoxypropyl (meth)acrylate, 3-chloro2-hydroxypropyl (meth)acrylate, and 2-hydroxy3-phenoxypropyl (meth)acrylate; and tertiary hydroxyl group-containing monomers such as 2,2-dimethyl2-hydroxyethyl (meth)acrylate.

Examples of the other monomers include amino group-containing monomers such as tert-butylaminoethyl (meth)acrylate, ethylaminoethyl (meth)acrylate, dimethylaminoethyl (meth)acrylate, and diethylaminoethyl (meth)acrylate; aromatic ring-containing monomers such as phenyl (meth)acrylate, benzyl (meth)acrylate, phenoxyethyl (meth)acrylate, phenoxydiethylene glycol (meth)acrylate, 2-hydroxy-3-phenoxypropyl (meth)acrylate, styrene, and α-methylstyrene; amide-based monomers such as (meth)acryloylmorpholine, dimethyl(meth)acrylamide, diethyl(meth)acrylamide (meth)acrylamide; alkoxy group and oxyalkoxy group-containing monomers such as 2-methoxyethyl (meth)acrylate, 2-ethoxyethyl (meth)acrylate, 3-methoxybutyl (meth)acrylate, 2-butoxyethyl (meth)acrylate, 2-butoxydiethylene glycol (meth)acrylate, methoxydiethylene glycol (meth)acrylate, methoxytriethylene glycol (meth)acrylate, ethoxydiethylene glycol (meth)acrylate, methoxydipropylene glycol (meth)acrylate, methoxypolyethylene glycol (meth)acrylate, octoxypolyethylene glycol-polypropylene glycol-mono(meth)acrylate, lauroxypolyethylene glycol mono(meth)acrylate, and stearoxypolyethylene glycol mono(meth)acrylate; acrylonitrile, methacrylonitrile, vinyl acetate, vinyl propionate, vinyl stearate, vinyl chloride, vinylidene chloride, alkyl vinyl ether, vinyltoluene, vinylpyridine, vinylpyrrolidone, itaconic acid dialkyl esters, fumaric acid dialkyl esters, allyl alcohol, acrylic chlorides, methyl vinyl ketone, N-acrylamide methyltrimethylammonium chloride, allyltrimethylammonium chloride, and dimethylallyl vinyl ketones.

As the polymerization method for the acrylic resin (a), conventionally known methods such as solution radical polymerization, suspension polymerization, bulk polymerization, and emulsion polymerization can be used, and for example, there is a method of mixing or dropping appropriately selected copolymerization components and a polymerization initiator in an organic solvent and performing polymerization under predetermined polymerization conditions. Of these, solution radical polymerization and bulk polymerization are preferable, and solution radical polymerization is particularly preferable in view of stably obtaining the acrylic resin (a).

Examples of the organic solvent to be used in the polymerization reaction include aromatic hydrocarbons such as toluene and xylene, aliphatic hydrocarbons such as hexane, esters such as ethyl acetate and butyl acetate, aliphatic alcohols such as n-propyl alcohol and isopropyl alcohol, ketones such as acetone, methyl ethyl ketone, methyl isobutyl ketone, and cyclohexanone.

Among these organic solvents, from the viewpoints of easiness of the polymerization reaction, effect of chain transfer, easiness of drying at the application of an adhesive, and safety, ethyl acetate, acetone, methyl ethyl ketone, butyl acetate, toluene, and methyl isobutyl ketone are preferable, and ethyl acetate, acetone, and methyl ethyl ketone are particularly preferable.

Examples of the polymerization initiator to be used for such radical polymerization include azo-based initiators such as 2,2'-azobisisobutyronitrile and 2,2'-azobis-2-methylbutyronitrile, 4,4'-azobis(4-cyanovaleric acid) and 2,2'-azobis(methylpropionic acid), organic peroxides such as benzoyl peroxide, laurolyl peroxide, di-tert-butyl peroxide and cumene hydroperoxide, which are common radical polymerization initiators, and they can be appropriately selected and used according to the monomer to be used. These polymerization initiators can be used alone or in combination of two or more thereof.

Thus, the acrylic resin (a) to be used in the present invention is obtained.

The weight average molecular weight of the acrylic resin (a) is preferably 200,000 to 2,500,000, particularly preferably 300,000 to 1,800,000, and still more preferably 400,000 to 1,500,000. When the weight average molecular weight is excessively small, durability and reworkability decrease, and when it is excessively large, the pot life becomes short and necessity of dilution with a large amount of a solvent occurs at the time of coating, so that it takes time to dry and thus productivity tends to be poor.

The dispersity (weight average molecular weight/number average molecular weight) of the acrylic resin (a) is preferably 15 or less, particularly preferably 10 or less, and still more preferably 6 or less. When the dispersity is excessively high, the cohesive force tends to decrease, the durability tends to decrease, and the reworkability tends to decrease. The lower limit of the dispersity is usually 1.

The weight average molecular weight of the acrylic resin (a) is weight average molecular weight in terms of standard polystyrene molecular weight, and is measured by using high performance liquid chromatography ("Waters 2695 (main body)" and "Waters 2414 (detector)" manufactured by Nippon Waters Co., Ltd.) and 3 columns in series: Shodex GPC KF-806L (exclusion limit molecular weight: $2 \times 10^7$, separation range: 100 to $2 \times 10^7$, theoretical number of stages: 10,000 stages/column, filler material: styrene-divinylbenzene copolymer, filler particle size: 10 μm), and the number average molecular weight can be also measured by the same method. The dispersity is obtained from the weight average molecular weight and the number average molecular weight.

The glass transition temperature (Tg) of the acrylic resin (a) is preferably -100 to 25°C, particularly preferably -80 to 0°C, and still more preferably -70 to -20°C. When the glass transition temperature is excessively high, the tackiness decreases and attachment becomes difficult, or zipping tends to occur at the time of reworking from a release film or adherend, and when the temperature is excessively low, heat resistance tends to decrease.

The glass transition temperature of the acrylic resin (a) is calculated by the following Fox equation.

[Num 1]

$$1/Tg = Wa/Tga + Wb/Tgb + \ldots\ldots + Wn/Tgn$$

Tg: Glass transition temperature of the acrylic resin (a) (K)
Tga: Glass transition temperature of homopolymer of monomer A (K)
Wa: Weight fraction of monomer A
Tgb: Glass transition temperature of homopolymer of monomer B (K)
Wb: Weight fraction of monomer B
Tgn: Glass transition temperature of homopolymer of monomer N (K)
Wn: Weight fraction of monomer N (Wa + Wb + ... + Wn = 1)

That is, the glass transition temperature of the acrylic resin (a) is a value calculated by applying the glass transition temperature and the weight fraction of a homopolymer to be formed from each of the monomers constituting the acrylic resin (a) to the Fox formula.

The glass transition temperature of the homopolymer to be formed from each monomer constituting the acrylic resin (a) is usually measured on a differential scanning calorimeter (DSC), and can be usually measured by a method according to JIS K7121-1987 or JIS K6240.

The adhesive composition preferably contains the crosslinking agent (b), and examples of the crosslinking agent include crosslinking agents to be used for ordinary adhesives such as isocyanate-based ones, metal chelate-based ones, epoxy-based ones, metal salts, metal alkoxides, aldehyde-based compounds, non-amino resin-based amino compounds, urea-based ones, melamine-based ones, and aziridine-based ones. Of these, isocyanate-based crosslinking agents and metal chelate-based crosslinking agents are particularly preferable.

The content of the crosslinking agent (b) is preferably 0.1 to 5 parts by weight, more preferably 0.1 to 2 parts by weight with respect to 100 parts by weight of the acrylic polymer (a). When the content is excessively small, the cohesive force tends to decrease, and when it is excessively large, there is a tendency that the adhesive force decreases and sufficient adhesive force cannot be exhibited.

The adhesive to be used in the adhesive tape of the present invention can be obtained by crosslinking an adhesive composition containing the acrylic resin (a) and the crosslinking agent (b). Further, the adhesive tape can be obtained by laminating and forming an adhesive layer made of such an adhesive on the second film layer.

The adhesive tape may be further provided with a release film on the surface of the adhesive layer opposite to the second film layer.

Further, various additives can be added to the above adhesive as needed. Examples of such additives include tackifiers, UV absorbers, antioxidants, plasticizers, pigments, stabilizers, fillers, and flame retardants.

The adhesive layer can be laminated on the surface of the second film layer opposite to the base material layer by usually dissolution in an appropriate organic solvent, application of the resultant and subsequent drying, or application on a process paper that has been subjected to a release treatment and subsequent transcription. There are no restrictions on the application method and the drying method, and known ones can be employed.

The following may be mentioned as methods for producing the adhesive tape of the present invention:

[1] A method of applying the adhesive composition to the surface of the second film layer opposite to the base material layer, drying it, then attaching a release sheet to the surface, and performing an aging treatment in a room temperature or heated state, and
[2] A method of applying the adhesive composition onto a release sheet, drying it, then attaching the resultant to the surface of the second film layer opposite to the base material layer, and performing an aging treatment in a room temperature or heated state.

Among these, the method of aging in a room temperature state in the method [2] is preferable in view of causing no damage on the base material by heat.

Such an aging treatment is carried out as reaction time for chemical crosslinking of the adhesive, in order to balance the adhesive physical properties. As the aging conditions, the temperature is usually room temperature to 70°C, and the time is usually 1 to 30 days. Specifically, for example, the treatment may be carried out under conditions of 23°C for 1 to 20 days, 23°C for 3 to 10 days, or 40°C for 1 to 7 days.

At the application of the adhesive composition, it is preferable that the adhesive composition is diluted with a solvent and then applied, and the dilution concentration is preferably 5 to 60% by weight, particularly preferably 10 to 30% by weight as the concentration of a heating residue. The solvent is not particularly limited as long as it dissolves the adhesive composition, and there can be, for example, used ester-based solvents such as methyl acetate, ethyl acetate, methyl acetoacetate, and ethyl acetoacetate, ketone-based solvents such as acetone, methyl ethyl ketone, and methyl isobutyl ketone, aromatic solvents such as toluene and xylene, and alcoholic solvents such as methanol, ethanol and propyl alcohol. Among these, ethyl acetate and methyl ethyl ketone are preferably used from the viewpoints of solubility, drying ability, price and the like.

The adhesive composition is applied by a conventional method such as roll coating, die coating, gravure coating, comma coating, or screen printing.

The thickness of the adhesive layer in the adhesive sheet to be obtained is preferably 10 to 500 $\mu$m, particularly preferably 15 to 350 $\mu$m, and further preferably 20 to 200 $\mu$m. When the adhesive layer is excessively thin, the thickness accuracy tends to decrease or the adhesive force tends to decrease, and when it is excessively thick, the adhesive layer tends to protrude from an edge when the adhesive sheet is rolled.

The gel fraction of the adhesive layer to be produced by the above method is preferably 20 to 80% by weight, particularly preferably 25 to 70% by weight, and further preferably 30 to 60% by weight from the viewpoint of close adhesiveness to the second film layer, reworkability, and holding force.

When the gel fraction is excessively low, the cohesive force tends to decrease, and when it is excessively high, there is a tendency that the adhesive force decreases and it becomes impossible to exert sufficient adhesive force. For controlling the gel fraction of the adhesive within the above range, it can be achieved by a polymerization method, adjustment of the type of the monomer, adjustment of the amount of the crosslinking agent to be added, and the like.

The gel fraction is a measure of the degree of crosslinking (degree of curing), and is, for example, calculated by the following method. That is, the adhesive is collected by picking from the adhesive tape in which the adhesive layer is formed on the second film layer on the base material layer, the adhesive is wrapped with a 200-mesh SUS wire net and immersed in toluene at 23°C for 48 hours, and the weight percentage of the insoluble adhesive component remaining in the wire net is regarded as the gel fraction.

Such an adhesive tape is made a product form wound in a roll shape. For this reason, the surface, which is opposite to the surface on which the adhesive layer of the adhesive tape is laminated and which is in contact with the adhesive layer when the adhesive tape is wound in a roll shape, may be preferably subjected to a release treatment. As the release treatment, a known one can be appropriately adopted, and examples thereof include application of a silicone-based release agent that involves a curing reaction, a fluorine-based release agent, and a long-chain alkyl graft polymer-based release agent.

Such an adhesive tape is useful for fixing a house wrap sheet.

[Base Material Layer]

The adhesive tape of the present invention has a base material layer made of a woven fabric, namely of a flat yarn cloth. The flat yarn cloth is preferable in view of a good hand-cutting property and tape strength.

Flat yarn cloth is a woven fabric made by cutting a polyethylene or polypropylene film called a flat yarn into strips and weaving flat yarns that have been stretched to give strength. The intersections of the flat yarns that intersect with each other are fixed by heat fusion to prevent yarn slippage.

For the flat yarn cloth to which the hand-cutting property is further imparted, for example, a flat yarn thinner in the longitudinal direction than in the width direction is used, or the number of flat yarns in the width direction is smaller than the number of flat yarns per length in the longitudinal direction. Thereby, it becomes easy to tear in the width direction, but it is difficult to tear in the longitudinal direction. In addition, high tensile strength in the longitudinal direction is also a characteristic of the flat yarn cloth to which the hand-cutting property is imparted.

A base material reinforced with non-woven fibers, different from flat yarn cloth, has much lower tensile strength as compared with the case of woven cloth. By laminating a biaxially stretched polyester film or a biaxially stretched polypropylene film with an adhesive in order to compensate for it, the tensile strength is improved, but it becomes difficult to tear the base material in the width direction. In addition, an adhesive is required for adhering the warp and weft yarns, and the weight of the base material tends to increase.

Further, a non-woven fabric can be used as the base material layer (not part of the invention). The non-woven fabric is preferably one formed from ultrafine fibers of a thermoplastic resin having a heat-fusion property. As the thermoplastic resin, there can be used polyolefins such as high-pressure low-density polyethylene, linear low-density polyethylene, high-density polyethylene, polypropylene, ethylene-propylene copolymers, and ethylene-vinyl acetate copolymers, polyesters such as polyethylene terephthalate and polybutylene terephthalate, modified polyesters, acrylics, and polyamides such as Nylon 6 and Nylon 66, and the like. Among these, polyolefins such as linear low-density polyethylene, high-density polyethylene, and polypropylene are desirable from the viewpoints of processability and economic efficiency.

The ultrafine fibers of these thermoplastic resins can be made a sea score structure in which the surface of a thermoplastic resin fiber having high strength is coated with a resin having a low melting point, or a side-by-side structure composed of a thermoplastic resin fiber having high strength and a resin having a low melting point. The non-woven fabric can be formed by a method known per se, such as a spun-bonding method, a needle punching method, and a carding method, and the weight of the non-woven fabric is preferably 5 to 100 g/m$^2$.

[First Film Layer, Second Film Layer]

Further, the adhesive tape of the present invention has a first film layer made of a thermoplastic resin film laminated on one surface of the base material layer and a second film layer made of a thermoplastic resin film laminated on the other surface of the base material layer.

As the thermoplastic resin constituting the thermoplastic resin film, one type or two or more types of different thermoplastic resins may be used through blending. The thermoplastic resin is not particularly limited, and examples thereof include polyethylene-based resins, polypropylene-based resins, polyester-based resins, $\alpha$-olefin-based polymers having a tertiary carbon in the side chain, Nylon resins, polyvinyl chloride resins, polyvinylidene chloride resins, and ethylene vinyl alcohol resins. Among these, from the viewpoint of suitability as a film material and processability, it is preferable to use one type or two or more types of different thermoplastic resins in combination, which are selected from polyethylene-based resins, polypropylene-based resins, polyester-based resins, and $\alpha$-olefin-based polymers having a tertiary carbon in the side chain, but a polyethylene-based resin is preferable in view of a heat-fusion property with flat yarn cloth and strength.

The first film layer is preferably a thin film, and the thickness of the first film layer is preferably 10 to 100 $\mu$m, particularly preferably 20 to 60 $\mu$m, and still more preferably 30 to 50 $\mu$m. When the first film layer is excessively thin, the UV blocking property tends to decrease and the mechanical properties of the adhesive tape tend to decrease. When it is excessively thick, the curl of the adhesive tape tends to be large.

The thickness of the second film layer is preferably equal to the thickness of the first film layer, and the ratio of the thickness of the first film layer to the thickness of the second film layer (thickness of the first film layer/thickness of the first film layer) is preferably less than 2, and more preferably 1.5 or less. The lower limit of the ratio is preferably 0.5 or more.

The method of laminating the thermoplastic resin film on the base material layer is preferably extrusion lamination in view of capability of weight reduction without using an adhesive.

In the adhesive tape of the present invention, a black pigment is contained in the first film layer and a pigment is contained in the second film layer. When only one of the film layers contains the pigment, the mechanical strength of the adhesive tape decreases and the UV blocking property decreases. When the content of the black pigment is increased to compensate for the UV blocking property, the UV blocking property is improved, but the tensile strength of the adhesive tape is lowered and/or curling occurs during use. Further, when the thickness of the first film layer containing the black pigment is increased, also, the UV blocking property is improved, but curling is likely to occur during use.

The black color herein means a color having a lightness of 0 to 2 in the so-called Munsell color system. The pigment to be used is not particularly limited, and organic pigments and inorganic pigments can be used. The black pigment is not particularly limited, and examples thereof include carbon black, aniline black, titanium black, inorganic pigment hematite, and perylene black, and carbon black is particularly preferable.

The content of the black pigment in the first film layer is 1 to 10% by weight, and particularly preferably 2 to 6% by weight. When the content of the black pigment is excessively small, the UV blocking property tends to decrease, and when it is excessively large, the tensile strength of the adhesive tape tends to decrease.

The content of the pigment in the second film layer is 1 to 10% by weight, and particularly preferably 2 to 6% by weight. When the content of the pigment in the second film layer is excessively small, the UV blocking property tends to decrease and the mechanical properties tend to decrease. It is presumed that, by incorporating an appropriate amount of the pigment into the second film layer, the mechanical properties are improved due to the reinforcing effect of the pigment. The pigment in the second film layer is preferably a black pigment.

Further, the content of the pigment in the second film layer is preferably about the same as the content of the black pigment in the first film layer, and the ratio of the content of the black pigment in the first film layer to the content of the pigment in the second film layer (content of black pigment in first film layer/content of pigment in second film layer) is preferably 0.5 to 2. Moreover, the pigment to be used in the second film layer is also preferably a black pigment.

Various additives can be added to the thermoplastic resin film according to the purpose. Specifically, there may be mentioned antioxidants, light stabilizers, ultraviolet absorbers, antistatic agents, flame retardants, fillers, antibacterial agents, dispersants such as bisamide-based, wax-based and organic metal salt-based ones; lubricants such as amide-based, wax-based, organic metal salt-based and ester-based ones, and the like.

The total thickness of the base material layer, the first film layer and the second film layer is preferably 10 to 200 $\mu$m, particularly preferably 30 to 180 $\mu$m, and still more preferably 50 to 150 $\mu$m. When the thickness is excessively thin, the UV blocking property tends to decrease, and when it is excessively thick, the hand-cutting property tends to decrease.

[Adhesive Layer]

In the adhesive tape of the present invention, an adhesive layer is laminated on a surface of the second film layer opposite to the base material layer. Such an adhesive layer is formed by crosslinking an adhesive composition, and the adhesive composition preferably contains an acrylic polymer (a).

The acrylic polymer (a) is a product of polymerizing one or two or more types of acrylic monomers. Examples of the acrylic monomers include (meth)acrylic acid alkyl esters having an alkyl group having 1 to 18 carbon atoms, preferably 1 to 8 carbon atoms, such as methyl (meth)acrylate, ethyl (meth)acrylate, n-butyl (meth)acrylate, iso-butyl (meth)acrylate, tert-butyl (meth)acrylate, n-propyl (meth)acrylate, n-hexyl (meth)acrylate, 2-ethylhexyl (meth)acrylate, n-octyl (meth)acrylate, isodecyl (meth)acrylate, lauryl (meth)acrylate, cetyl (meth)acrylate, and stearyl (meth)acrylate.

As monomers constituting the acrylic polymer (a), there may be mentioned carboxyl group-containing monomers, hydroxyl group-containing monomers, and the other monomers, in addition to the acrylic monomers.

Examples of the carboxyl group-containing monomers include (meth)acrylic acid, acrylic acid dimer, crotonic acid, maleic acid, maleic anhydride, fumaric acid, citraconic acid, glutaconic acid, itaconic acid, acrylamide N-glycolic acid, and cinnamic acid. Examples of the hydroxyl group-containing monomers include acrylic acid hydroxyalkyl esters such as 2-hydroxyethyl (meth)acrylate, 4-hydroxybutyl (meth)acrylate, 5-hydroxypentyl (meth)acrylate, 6-hydroxyhexyl (meth)acrylate, and 8-hydroxyoctyl (meth)acrylate, caprolactone-modified monomers such as caprolactone-modified 2-hydroxyethyl (meth)acrylate, oxyalkylene-modified monomers such as diethylene glycol (meth)acrylate and polyethylene glycol (meth)acrylate, in addition, primary hydroxyl group-containing monomers such as 2-acryloyloxyethyl 2-hydroxyethylphthalic acid and N-methylol (meth)acrylamide; secondary hydroxyl group-containing monomers such as 2-hydroxypropyl (meth)acrylate, 2-hydroxybutyl (meth)acrylate, 2-hydroxy3-phenoxypropyl (meth)acrylate, 3-chloro2-hydroxypropyl (meth)acrylate, and 2-hydroxy3-phenoxypropyl (meth)acrylate; and tertiary hydroxyl group-containing monomers such as 2,2-dimethyl2-hydroxyethyl (meth)acrylate.

Examples of the other monomers include amino group-containing monomers such as tert-butylaminoethyl (meth)acrylate, ethylaminoethyl (meth)acrylate, dimethylaminoethyl (meth)acrylate, and diethylaminoethyl (meth)acrylate; aromatic ring-containing monomers such as phenyl (meth)acrylate, benzyl (meth)acrylate, phenoxyethyl (meth)acrylate, phenoxydiethylene glycol (meth)acrylate, 2-hydroxy-3-phenoxypropyl (meth)acrylate, styrene, and $\alpha$-methylstyrene; amide-based monomers such as (meth)acryloylmorpholine, dimethyl(meth)acrylamide, diethyl(meth)acrylamide (meth)acrylamide; alkoxy group and oxyalkoxy group-containing monomers such as 2-methoxyethyl (meth)acrylate, 2-ethoxyethyl (meth)acrylate, 3-methoxybutyl (meth)acrylate, 2-butoxyethyl (meth)acrylate, 2-butoxydiethylene glycol (meth)acrylate, methoxydiethylene glycol (meth)acrylate, methoxytriethylene glycol (meth)acrylate, ethoxydiethylene glycol (meth)acrylate, methoxydipropylene glycol (meth)acrylate, methoxypolyethylene glycol (meth)acrylate, octoxypolyethylene glycol-polypropylene glycol-mono(meth)acrylate, lauroxypolyethylene glycol mono(meth)acrylate, and stearoxypolyethylene glycol mono(meth)acrylate; acrylonitrile, methacrylonitrile, vinyl acetate, vinyl propionate, vinyl stearate, vinyl chloride, vinylidene chloride, alkyl vinyl ether, vinyltoluene, vinylpyridine, vinylpyrrolidone, itaconic acid dialkyl esters, fumaric acid dialkyl esters, allyl alcohol, acrylic chlorides, methyl vinyl ketone, N-acrylamide methyltrimethylammonium chlorides, allyltrimethylammonium chloride, and dimethylallyl vinyl ketones.

As the polymerization method for the acrylic resin (a), conventionally known methods such as solution radical polymerization, suspension polymerization, bulk polymerization, and emulsion polymerization can be used, and for example, there is a method of mixing or dropping appropriately selected copolymerization components and a polymerization initiator in an organic solvent and performing polymerization under predetermined polymerization conditions. Of these, solution radical polymerization and bulk polymerization are preferable, and solution radical polymerization is particularly preferable in view of stably obtaining the acrylic resin (a).

Examples of the organic solvent to be used in the polymerization reaction include aromatic hydrocarbons such as toluene and xylene, aliphatic hydrocarbons such as hexane, esters such as ethyl acetate and butyl acetate, aliphatic alcohols such as n-propyl alcohol and isopropyl alcohol, ketones such as acetone, methyl ethyl ketone, methyl isobutyl ketone, and cyclohexanone.

Among these organic solvents, from the viewpoints of easiness of the polymerization reaction, effect of chain transfer, easiness of drying at the application of an adhesive, and safety, ethyl acetate, acetone, methyl ethyl ketone, butyl acetate, toluene, and methyl isobutyl ketone are preferable, and ethyl acetate, acetone, and methyl ethyl ketone are particularly preferable.

Examples of the polymerization initiator to be used for such radical polymerization include azo-based initiators such as 2,2'-azobisisobutyronitrile and 2,2'-azobis-2-methylbutyronitrile, 4,4'-azobis(4-cyanovaleric acid) and 2,2'-azo-bis(methylpropionic acid), organic peroxides such as benzoyl peroxide, laurolyl peroxide, di-tert-butyl peroxide and cumene hydroperoxide, which are common radical polymerization initiators, and they can be appropriately selected and used according to the monomer to be used. These polymerization initiators can be used alone or in combination of two or more thereof.

Thus, the acrylic resin (a) to be used in the present invention is obtained.

The weight average molecular weight of the acrylic resin (a) is preferably 200,000 to 2,500,000, particularly preferably 300,000 to 1,800,000, and still more preferably 400,000 to 1,500,000. When the weight average molecular weight is excessively small, durability and reworkability decrease, and when it is excessively large, the pot life becomes short and necessity of dilution with a large amount of a solvent occurs at the time of coating, so that it takes time to dry and productivity tends to be poor.

The dispersity (weight average molecular weight/number average molecular weight) of the acrylic resin (a) is preferably 15 or less, particularly preferably 10 or less, and still more preferably 6 or less. When the dispersity is excessively high, the cohesive force tends to decrease, the durability tends to decrease, and the reworkability tends to decrease. The lower limit of the dispersity is usually 1.

The weight average molecular weight of the acrylic resin (a) is weight average molecular weight in terms of standard polystyrene molecular weight, and is measured by using high performance liquid chromatography ("Waters 2695 (main body)" and "Waters 2414 (detector)" manufactured by Nippon Waters Co., Ltd.) and 3 columns in series: Shodex GPC KF-806L (exclusion limit molecular weight: $2\times10^7$, separation range: 100 to $2\times10^7$, theoretical number of stages: 10,000 stages/column, filler material: styrene-divinylbenzene copolymer, filler particle size: 10 $\mu$m), and the number average molecular weight can be also measured by the same method. The dispersity is obtained from the weight average molecular weight and the number average molecular weight.

The glass transition temperature (Tg) of the acrylic resin (a) is preferably -100 to 25°C, particularly preferably -80 to 0°C, and still more preferably -70 to -20°C. When the glass transition temperature is excessively high, the tackiness decreases and attachment becomes difficult, or zipping tends to occur at the time of reworking from a release film or adherend, and when the temperature is excessively low, heat resistance tends to decrease.

The glass transition temperature of the acrylic resin (a) is calculated by the following Fox equation.

[Num 2]

$$1/Tg = Wa/Tga + Wb/Tgb + ........ + Wn/Tgn$$

Tg: Glass transition temperature of the acrylic resin (a) (K)
Tga: Glass transition temperature of homopolymer of monomer A (K)
Wa: Weight fraction of monomer A
Tgb: Glass transition temperature of homopolymer of monomer B (K)
Wb: Weight fraction of monomer B
Tgn: Glass transition temperature of homopolymer of monomer N (K)
Wn: Weight fraction of monomer N (Wa + Wb + ... + Wn = 1)

That is, the glass transition temperature of the acrylic resin (a) is a value calculated by applying the glass transition temperature and the weight fraction of a homopolymer to be formed from each of the monomers constituting the acrylic resin (a) to the Fox formula.

The glass transition temperature of the homopolymer to be formed from each monomer constituting the acrylic resin (a) is usually measured on a differential scanning calorimeter (DSC), and can be usually measured by a method according to JIS K7121-1987 or JIS K6240.

The adhesive composition preferably contains the crosslinking agent (b), and examples of the crosslinking agent include crosslinking agents to be used for ordinary adhesives such as isocyanate-based ones, metal chelate-based ones, epoxy-based ones, metal salts, metal alkoxides, aldehyde-based compounds, non-amino resin-based amino compounds, urea-based ones, melamine-based ones, and aziridine-based ones. Of these, isocyanate-based crosslinking agents and metal chelate-based crosslinking agents are particularly preferable.

The content of the crosslinking agent (b) is preferably 0.1 to 5 parts by weight, more preferably 0.1 to 2 parts by weight with respect to 100 parts by weight of the acrylic polymer (a). When the content is excessively small, the cohesive force tends to decrease, and when it is excessively large, there is a tendency that the adhesive force decreases and sufficient adhesive force cannot be exhibited.

The adhesive to be used in the adhesive tape of the present invention can be obtained by crosslinking an adhesive composition containing the acrylic resin (a) and the crosslinking agent (b). Further, the adhesive tape can be obtained by laminating and forming an adhesive layer made of such an adhesive on the second film layer.

The adhesive tape may be further provided with a release film on the surface of the adhesive layer opposite to the second film layer.

Further, various additives can be added to the above adhesive as needed. Examples of such additives include tackifiers, UV absorbers, antioxidants, plasticizers, pigments, stabilizers, fillers, and flame retardants.

The adhesive layer can be laminated on the surface of the second film layer opposite to the base material layer by usually dissolution in an appropriate organic solvent, application of the resultant and subsequent drying or application on a process paper that has been subjected to a release treatment and subsequent transcription. There are no restrictions on the application method and the drying method, and known ones can be employed.

The following may be mentioned as methods for producing the adhesive tape of the present invention:

[1] A method of applying the adhesive composition to the surface of the second film layer opposite to the base material layer, drying it, then attaching a release sheet to the surface, and performing an aging treatment in a room temperature or heated state, and

[2] A method of applying the adhesive composition onto a release sheet, drying it, then attaching the resultant to the surface of the second film layer opposite to the base material layer, and performing an aging treatment in a room temperature or heated state.

Among these, the method of aging in a room temperature state in the method [2] is preferable in view of causing no damage on the base material by heat.

Such an aging treatment is carried out as reaction time for chemical crosslinking of the adhesive, in order to balance the adhesive physical properties. As the aging conditions, the temperature is usually room temperature to 70°C, and the time is usually 1 to 30 days. Specifically, for example, the treatment may be carried out under conditions of 23°C for 1 to 20 days, 23°C for 3 to 10 days, or 40°C for 1 to 7 days.

At the application of the adhesive composition, it is preferable that the adhesive composition is diluted with a solvent and then applied, and the dilution concentration is preferably 5 to 60% by weight, particularly preferably 10 to 30% by weight as the concentration of a heating residue. The solvent is not particularly limited as long as it dissolves the adhesive composition, and there can be, for example, used ester-based solvents such as methyl acetate, ethyl acetate, methyl acetoacetate, and ethyl acetoacetate, ketone-based solvents such as acetone, methyl ethyl ketone, and methyl isobutyl ketone, aromatic solvents such as toluene and xylene, and alcoholic solvents such as methanol, ethanol and propyl alcohol. Among these, ethyl acetate and methyl ethyl ketone are preferably used from the viewpoints of solubility, drying ability, price and the like.

The adhesive composition is applied by a conventional method such as roll coating, die coating, gravure coating, comma coating, or screen printing.

The thickness of the adhesive layer in the adhesive sheet to be obtained is preferably 10 to 500 $\mu$m, particularly preferably 15 to 350 $\mu$m, and further preferably 20 to 200 $\mu$m. When the adhesive layer is excessively thin, the thickness accuracy tends to decrease or the adhesive force tends to decrease, and when it is excessively thick, the adhesive layer tends to protrude from an edge when the adhesive sheet is rolled.

The gel fraction of the adhesive layer to be produced by the above method is preferably 20 to 80% by weight, particularly preferably 25 to 70% by weight, and further preferably 30 to 60% by weight from the viewpoint of close adhesiveness to the second film layer, reworkability, and holding force.

When the gel fraction is excessively low, the cohesive force tends to decrease, and when it is excessively high, there is a tendency that the adhesive force decreases and it becomes impossible to exert sufficient adhesive force. For controlling the gel fraction of the adhesive within the above range, it can be achieved by a polymerization method, adjustment of the type of the monomer, adjustment of the amount of the crosslinking agent to be added, and the like.

The gel fraction is a measure of the degree of crosslinking (degree of curing), and is, for example, calculated by the following method. That is, the adhesive is collected by picking from the adhesive tape in which the adhesive layer is formed on the second film layer on the base material layer, the adhesive is wrapped with a 200-mesh SUS wire net and immersed in toluene at 23°C for 48 hours, and the weight percentage of the insoluble adhesive component remaining in the wire net is regarded as the gel fraction.

Such an adhesive tape is made a product form wound in a roll shape. For this reason, the surface opposite to the surface on which the adhesive layer of the adhesive tape is laminated and in contact with the adhesive layer when the adhesive tape is wound in a roll shape may be preferably subjected to a release treatment. As the release treatment, a known one can be appropriately adopted, and examples thereof include application of a silicone-based release agent that involves a curing reaction, a fluorine-based release agent, and a long-chain alkyl graft polymer-based release agent.

Such an adhesive tape is useful for fixing a house wrap sheet.

Examples

Hereinafter, the present invention will be described further more concretely by ways of Examples, but the present invention is not limited to the following Examples, unless the gist of the present invention is exceeded. In the example, "part" and "%" are based on weight.
Further, the weight average molecular weight, the dispersity, and the gel fraction of the adhesive layer of the acrylic resin (a) in the following examples were measured according to the above-mentioned method.
As the glass transition temperature of the acrylic resin (a) was calculated using the Fox equation described above, and the glass transition temperature of a homopolymer to be formed from each monomer constituting the acrylic resin (a), a literature value and a value described in a catalog thereof usually measured by DSC (differential scanning calorimetry) were used.

<Production of Acrylic Resin (a-1)>

Into a four-neck round bottom flask equipped with a reflux condenser, a stirrer, a nitrogen gas inlet and a thermometer, 30 parts of ethyl acetate and 0.02 parts of azobisisobutyronitrile (AIBN) as a polymerization catalyst were charged. The temperature was elevated with stirring, and when the internal temperature became stable at 78°C, a mixture obtained by mixing and dissolving 93 parts of 2-ethylhexyl acrylate, 5 parts of vinyl acetate, and 2 parts of acrylic acid as copolymerizing components and 0.015 parts of azobisisobutyronitrile (AIBN) as a polymerization initiator was added dropwise over a period of 2 hours and reacted under reflux. Then, 20 parts of ethyl acetate was added after 7 hours from the start of the reaction, and thereafter, 5 parts of Super Ester A-75 (manufactured by Arakawa Chemical Industries, Ltd.) was added as a tackifier and the resultant was diluted with 56 parts of ethyl acetate to obtain an acrylic resin (a-1) solution (solid content 53.0%, viscosity 10000 mPa·s/25 °C).

<Preparation of Adhesive Composition>

Tetrad C (manufactured by Mitsubishi Gas Chemical Company, Inc.) as a cross-linking agent (b) was added in an amount of 0.37 parts to 100 parts of the solid content of the acrylic resin (a-1) to obtain an adhesive composition.

[Example 1]

<Preparation of Tape Base Material>

A flat yarn cloth was obtained as a plain-weave woven fabric using a warp yarn made of high-density polyethylene and a weft yarn made of high-density polyethylene on a water jet machine and was used as a base material layer.
High-pressure low-density polyethylene containing 4% by weight of carbon black was subjected to extrusion lamination to laminate a first film layer having a thickness of 40 μm and a second film layer having a thickness of 40 μm on both surfaces of the base material layer of the obtained flat yarn cloth, thereby obtaining a tape base material.

<Adhesive Tape>

The above-described adhesive composition was applied to the second film layer in the tape base material obtained above so as to have a thickness of 50 μm after drying, and after drying at 80°C for 5 minutes, the resultant was aged at 40°C for 7 days and cut to a width of 50 mm to obtain an adhesive tape. When the gel fraction of the adhesive layer of the adhesive tape was measured, it was found to be 43% by weight.
Moreover, since the flat yarn cloth was used for the base material layer, the adhesive tape had a good hand-cutting property.

[UV Blocking Property]

Using a spectrophotometer V-7200 manufactured by JASCO Corporation, the UV transmittance of the obtained adhesive tape at a wavelength of 400 nm was measured until the number of integration times reached 16 times and evaluated based on the following criteria. The results are shown in Table 1.

Evaluation criteria

A: less than 0.1%
B: 0.1% or more and less than 1.0%
C: 1.0% or more

[Tensile Strength and Elongation at Break]

The tensile strength and elongation at break of the obtained adhesive tape were measured at a tensile speed of 50 mm/min using an autograph AG-XPlus manufactured by Shimadzu Corporation, and evaluated based on the following criteria. The results are shown in Table 1.

Evaluation criteria of tensile strength

A: 180 N/25 mm or more
B: 165 N/25 mm or more and less than 180 N/25 mm
C: less than 165 N/25 mm

Evaluation criteria of elongation at break

A: 20 mm or more
C: less than 20 mm

[Curling Property]

The tape base material was cut into a film of 5 cm × 5 cm, and subjected to a heat treatment at 70°C for 30 minutes in a state that the base material was placed on a horizontal table with the first film layer facing up. The raised heights of the four corners at that time were measured, an average value thereof was calculated, and the curling property was evaluated based on the following criteria. The results are shown in Table 1. Incidentally, it can be estimated that the curling property of the tape base material correlates with the curling property of the adhesive tape having the adhesive layer.

Evaluation criteria

A: less than 5 mm
B: 5 mm or more and less than 10 mm
C: 10 mm or more

[Comparative Example 1]

An adhesive tape was obtained in the same manner as in Example 1 except that there was used a tape base material in which only the first film layer contained 4% by weight of carbon black and the second film layer contained no carbon black, and then the tape was evaluated. The results are shown in Table 1.

[Comparative Example 2]

An adhesive tape was obtained in the same manner as in Example 1 except that there was used a tape base material in which the carbon black content of the first film layer was 8% by weight (twice that in Example 1) and the second film layer contained no carbon black, and then the tape was evaluated. The results are shown in Table 1.

[Comparative Example 3]

An adhesive tape was obtained in the same manner as in Example 1 except that there was used a tape base material in which the thickness of the first film layer was 80 μm (twice that in Example 1) and the second film layer contained no carbon black, and then the tape was evaluated. The results are shown in Table 1.

Since the tape base material of Comparative Example 3 had an excessively strong curling property, the tape base material was curled during the measurement of the curling property, and thus the curling property could not be measured.

[Table 1]

Table 1

| | UV transmittance [400 nm] | | Tensile strength | | Elongation at break | | Curling property [70°C×30min] | |
|---|---|---|---|---|---|---|---|---|
| | Measured value (%) | Evaluation | Measured value (N/25 mm) | Evaluation | Measured value (mm) | Evaluation | Measured value (mm) | Evaluation |
| Example 1 | 0 | A | 192 | A | 22 | A | 2 | A |
| Comparative Example 1 | 44 | c | 162 | c | 17 | c | 2 | A |
| Comparative Example 2 | 0 | A | 161 | c | 17 | c | 3 | A |
| Comparative Example 3 | 0 | A | 174 | B | 19 | c | Impossible to measure | c |

From the results in Table 1, it is found that the adhesive tape of Example 1 containing the pigment in both the first film layer and the second film layer has an excellent UV blocking property, high tensile strength, large elongation at break, excellent mechanical properties, and a small curling property.

It is found that the adhesive tape of Comparative Example 1 containing the pigment only in the first film layer is inferior in the UV blocking property, and the adhesive tape of Comparative Example 2 containing a large amount of the pigment in the first film layer has a good UV blocking property, but the tensile strength and the elongation at break are lowered, the mechanical properties are inferior, and the curling property is slightly increased.

It is found that the adhesive tape of Comparative Example 3 in which the thickness of the first film layer containing the pigment is increased has a good UV blocking property and, although the decrease in mechanical properties is relatively small, the curling property is very strong.

INDUSTRIAL APPLICABILITY

The adhesive tape of the present invention is excellent in the hand-cutting property and the UV blocking property, and is excellent in mechanical properties and curling resistance. Therefore, it is suitably used as an adhesive tape for fixing a house wrap sheet or the like.

**Claims**

1. An adhesive tape comprising:

    a base material layer made of flat yarn cloth,
    a first film layer made of a thermoplastic resin film laminated on one surface of the base material layer,
    a second film layer made of a thermoplastic resin film laminated on the other surface of the base material layer, and
    an adhesive layer laminated on the surface of the second film layer opposite to the base material layer, wherein the first film layer and the second film layer both contain a black pigment, and
    a content of the black pigment in the first film layer and a content of the black pigment in the second film layer are both 1 to 10% by weight.

2. The adhesive tape according to claim 1, wherein the black pigment is carbon black.

3. The adhesive tape according to claim 1 or 2, wherein the thickness of the first film layer and the thickness of the second film layer are both 10 to 100 $\mu$m.

4. The adhesive tape according to any one of claims 1 to 3, wherein the adhesive layer is made of an adhesive composition, the adhesive composition contains an acrylic polymer (a) and a crosslinking agent (b), and a gel fraction of the adhesive layer is 20 to 80% by weight, wherein
    the gel fraction is a measure of the degree of crosslinking or degree of curing, calculated by the following method: The adhesive is collected by picking from the adhesive tape in which the adhesive layer is formed on the second film layer on the base material layer, the adhesive is wrapped with a 200-mesh SUS wire net and immersed in toluene at 23 °C for 48 hours, and the weight percentage of the insoluble adhesive component remaining in the wire net is regarded as the gel fraction.

**Patentansprüche**

1. Klebeband, umfassend:

    eine Basismaterialschicht aus einem flachen Garnstoff,
    eine erste Filmschicht aus einem thermoplastischen Harzfilm, die auf eine Oberfläche der Basismaterialschicht laminiert ist,
    eine zweite Filmschicht aus einem thermoplastischen Harzfilm, die auf die andere Oberfläche der Basismaterialschicht laminiert ist, und
    eine Klebeschicht, die auf die der Basismaterialschicht gegenüberliegende Oberfläche der zweiten Filmschicht laminiert ist, wobei
    die erste Folienschicht und die zweite Folienschicht beide ein schwarzes Pigment enthalten und

ein Gehalt des schwarzen Pigments in der ersten Folienschicht und ein Gehalt des schwarzen Pigments in der zweiten Folienschicht jeweils 1 bis 10 Gew.-% betragen.

2. Klebeband nach Anspruch 1, wobei das schwarze Pigment Ruß ist.

3. Klebeband gemäß Anspruch 1 oder 2, wobei die Dicke der ersten Filmschicht und die Dicke der zweiten Filmschicht jeweils 10 bis 100 μm betragen.

4. Klebeband nach einem der Ansprüche 1 bis 3, wobei die Klebeschicht aus einer Klebstoffzusammensetzung besteht, die Klebstoffzusammensetzung ein Acrylpolymer (a) und ein Vernetzungsmittel (b) enthält und ein Gelanteil der Klebeschicht 20 bis 80 Gew.-% beträgt, wobei
der Gelanteil ein Maß für den Vernetzungsgrad oder Aushärtungsgrad ist, der nach dem folgenden Verfahren berechnet wird: Der Klebstoff wird aus dem Klebeband, bei dem die Klebeschicht auf der zweiten Filmschicht auf der Basismaterialschicht ausgebildet ist, entnommen, mit einem 200-mesh-SUS-Drahtnetz umwickelt und 48 Stunden lang bei 23 °C in Toluol getaucht, und der Gewichtsprozentsatz der im Drahtnetz verbleibenden unlöslichen Klebstoffkomponente wird als der Gelanteil betrachtet.

**Revendications**

1. Un ruban adhésif comprenant :

une couche de matériau de base constituée d'un tissu à fils plats,
une première couche de film constituée d'un film de résine thermoplastique laminé sur une surface de la couche de matériau de base,
une deuxième couche de film constituée d'un film de résine thermoplastique laminé sur l'autre surface de la couche de matériau de base, et
une couche adhésive laminée sur la surface de la deuxième couche de film opposée à la couche de matériau de base, dans lequel
la première couche de film et la deuxième couche de film contiennent toutes deux un pigment noir, et
la teneur en pigment noir dans la première couche de film et la teneur en pigment noir dans la deuxième couche de film sont toutes deux de 1 à 10 % en poids.

2. Le ruban adhésif selon la revendication 1, dans lequel le pigment noir est du noir de carbone.

3. Le ruban adhésif selon la revendication 1 ou 2, dans lequel l'épaisseur de la première couche de film et l'épaisseur de la deuxième couche de film sont toutes deux de 10 à 100 μm.

4. Le ruban adhésif selon l'une des revendications 1 à 3, dans lequel la couche adhésive est constituée d'une composition adhésive, la composition adhésive contient un polymère acrylique (a) et un agent de réticulation (b), et la fraction de gel de la couche adhésive est comprise entre 20 et 80 % en poids, dans lequel
la fraction de gel est une mesure du degré de réticulation ou du degré de durcissement, calculée selon la méthode suivante : l'adhésif est recueilli en le prélevant à partir du ruban adhésif dans lequel la couche adhésive est formée sur la deuxième couche de film sur la couche de matériau de base, l'adhésif est enveloppé dans un filet métallique SUS de 200 mailles et immergé dans du toluène à 23 °C pendant 48 heures, et le pourcentage en poids du composant adhésif insoluble restant dans le filet métallique est considéré comme la fraction de gel.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003119437 A
- JP 2001294830 A
- WO 2008055789 A1